# EUROPÄISCHE PATENTSCHRIFT

(11) **EP 3 583 008 B1**
(45) Veröffentlichungstag und Bekanntmachung des Hinweises auf die Patenterteilung: **23.03.2022**
(21) Anmeldenummer: 18704163.7
(22) Anmeldetag: 25.01.2018
(51) Int. Cl.: B60T 7/12, B60T 8/88

(54) **VERFAHREN UND FAHRZEUGSTEUERGERÄT FÜR EIN AUTONOMES FAHRZEUG UND FAHRZEUG**
METHOD AND VEHICLE CONTROL APPLIANCE FOR AN AUTONOMOUS VEHICLE AND VEHICLE
PROCÉDÉ ET APPAREIL DE COMMANDE DE VÉHICULE POUR UN VÉHICULE AUTONOME ET VÉHICULE

(30) Priorität: 14.02.2017 DE 102017001409
(43) Veröffentlichungstag der Anmeldung: 25.12.2019
(73) Patentinhaber: ZF CV Systems Europe BV, 1170 Brussels (BE)
(72) Erfinder: FRANKE, Torsten, 31303 Burgdorf (DE); HECHT, Christian, 31515 Wunstorf (DE)
(74) Vertreter: Koschnitzki, Thomas
(86) Internationale Anmeldenummer: PCT/EP2018/051879
(87) Internationale Veröffentlichungsnummer: WO 2018/149613

(56) Entgegenhaltungen:
- EP-A1- 2 998 177
- EP-A1- 3 118 071
- DE-A1-102014 200 071
- US-A1- 2011 316 327

## Beschreibung

Die Erfindung betrifft ein Verfahren zur Steuerung eines autonomen Fahrzeugs gemäß dem Oberbegriff des Anspruchs 1. Darüber hinaus betrifft die Erfindung ein Fahrzeugsteuergerät gemäß dem Oberbegriff des Anspruchs 12. Schließlich betrifft die Erfindung ein Fahrzeug mit einem Steuerungssystem für ein autonomes Fahrzeug gemäß dem Oberbegriff des Anspruchs 18.

Bei der Entwicklung von Fahrzeugen für autonomes Fahren im Straßenverkehr, also einem selbständigen Fahren des Fahrzeugs im Normalfall ohne Fahrereingriff, ergeben sich besondere Sicherheitsanforderungen. Diese Anforderungen muss die Bordelektronik und müssen damit alle Fahrzeugsteuergeräte erfüllen. Dies gilt vor allem aber nicht nur für Bremssysteme, die in großen Fahrzeugen wie beispielsweise Lastkraftwagen oder Bussen eingesetzt werden. Hier werden in der Regel pneumatische, teilweise aber auch hydraulische Bremssysteme eingesetzt.

Eine Fahrzeugsteuerung als Teil der Bordelektronik dient bei autonomen Fahrzeugen dazu, zumindest alle erforderlichen Fahrfunktionen für einen sicheren Betrieb geeignet zu steuern. Auch wenn dies aufgrund sorgfältiger Auslegung aller Systeme zwar unwahrscheinlich ist, müssen dennoch für den Fall, dass die Fahrzeugsteuerung ausfällt oder auch nur die Kommunikation zwischen der Fahrzeugsteuerung und den angeschlossenen Fahrzeugsteuergeräte für die einzelnen Fahrfunktionen gestört ist, zusätzliche Sicherheitsmaßnahmen ergriffen werden, ohne dass ein Fahrereingriff erforderlich ist. Dies ist insbesondere im Hinblick auf das Bremssystem wichtig, das im Falle einer Fehlfunktion der Bordelektronik automatisch aktiviert werden sollte, um einen Bremsvorgang einzuleiten. Darüber hinaus muss die Bremseinrichtung aber sowohl durch die Fahrzeugsteuerung als auch durch das Bremssteuergerät unabhängig voneinander aktivierbar sein.

Die Sicherheitsanforderungen werden im Stand der Technik dadurch erfüllt, dass an der Bremseinrichtung separate Anschlüsse für die Fahrzeugsteuerung und das Bremssteuergerät eingesetzt werden. Sobald eines der beiden Geräte die Bremse aktiviert, muss ein Bremsvorgang erfolgen. Umgekehrt müssen beide die Bremse deaktivieren, um ein Fahren zu ermöglichen.

Die DE102014200071A1 offenbart eine Bremsanlage für ein Kraftfahrzeug, insbesondere mit einer autonomen Fahrfunktion, welche einen mittels eines Bremspedals betätigbaren Hauptbremszylinder, der mit Radbremsen des Kraftfahrzeuges, insbesondere trennbar, verbunden ist. Die Bremsanlage weist ferner auf eine erste elektrisch steuerbare Druckbereitstellungseinrichtung, welche mit den Radbremsen verbindbar ist, eine Druckregelventilanordnung, eine erste elektronische Steuer- und Regeleinheit zur Ansteuerung der ersten Druckbereitstellungseinrichtung und der Druckregelventilanordnung, eine zweite elektrisch steuerbare Druckbereitstellungseinrichtung, mittels welcher ein Bremsdruck an den Radbremsen aufbaubar ist, und eine zweite elektronische Steuer- und Regeleinheit zur Ansteuerung der zweiten Druckbereitstellungseinrichtung. Dabei sind zumindest eine erste elektrische Energieversorgungseinrichtung und eine zweite elektrische Energieversorgungseinrichtung vorgesehen, wobei die erste und die zweite Steuer- und Regeleinheit jeweils von der ersten Energieversorgungseinrichtung und der zweiten Energieversorgungseinrichtung mit elektrischer Energie versorgbar ist.

Nachteilig am Stand der Technik ist insbesondere, dass separate Leitungen zur Ansteuerung der Bremseinrichtung für Fahrzeugsteuerung und Bremssteuergerät vorgesehen sind. Aus Sicherheitsgründen ist seitens der Bremseinrichtung außerdem in aufwändiger Weise zusätzlich zu überprüfen, dass weder bei der Fahrzeugsteuerung noch beim Bremssteuergerät eine Fehlfunktion bei der Ansteuerung der Bremseinrichtung vorliegt.

Es ist Aufgabe der Erfindung, insbesondere die vorstehend genannten Nachteile zu beseitigen. Außerdem soll eine möglichst kostengünstige Anschlussart ermöglicht werden.

Ein Verfahren zur Steuerung eines autonomen Fahrzeugs mit den Merkmalen den Anspruchs 1 löst diese Aufgabe. Das Fahrzeug ist dazu mit einem Fahrzeugsteuergerät zur Steuerung autonomer Fahrfunktionen und mit einem Bremssteuergerät zur Steuerung von Bremsfunktionen eines insbesondere pneumatischen Bremssystems ausgestattet. Es ist außerdem wenigstens eine Bremseinrichtung, insbesondere eine Feststellbremse, vorgesehen, wobei die Bremseinrichtung durch das Bremssteuergerät und/oder das Fahrzeugsteuergerät zum Bremsen aktivierbar und zum Fahren deaktivierbar ist. Hierzu wird wenigstens ein Schaltelement, vorzugsweise ein Magnetventil, der Bremseinrichtung angesteuert. Das Verfahren zeichnet sich erfindungsgemäß dadurch aus, dass das Schaltelement zur Deaktivierung der Bremseinrichtung vom Bremssteuergerät und vom Fahrzeugsteuergerät gemeinsam angesteuert wird. Damit ist sichergestellt, dass bereits bei Ausfall nur eines der Geräte eine Sicherheitsbremsung erfolgt.

Vorzugsweise sind zwei elektrische Leiter zur Ansteuerung vorgesehen, wobei einer der beiden Leiter vom Bremssteuergerät und der andere der beiden Leiter vom Fahrzeugsteuergerät geschaltet werden. Dies ist vorteilhaft, da lediglich ein Anschluss mit zwei Leitern an der Bremseinrichtung benötigt wird. Weitere separate Anschlüsse können eingespart werden.

Das Schaltelement wird vorzugsweise mittels der beiden Leiter mit elektrischem Strom versorgt. Bei dem Schaltelement handelt es sich Insbesondere um ein Magnetventil. Das Schaltelement beziehungsweise Magnetventil dient zur Schalten der Bremseinrichtung. Durch das Schaltelement wird das Druckmedium der pneumatischen beziehungsweise hydraulischen Bremseinrichtung zur Beaufschlagung von Bremszylindern freigegeben oder gestoppt. Ein Magnetventil ermöglicht dabei eine elektrische Ansteuerung.

Insbesondere wird die Schaltfunktion des Schaltelements mittels wenigstens einer elektrischen Spule realisiert. Die Spule dient dabei vorzugsweise zum magnetischen Schalten des Schaltelements, vorzugsweise in Form eines Magnetventils. Dies sichert eine schnelle und zuverlässige Schaltfunktion.

Vorzugsweise kann die Stromversorgung des Schaltelements unterbrochen werden, bevorzugt durch Unterbrechen zumindest eines der beiden Leiter. Durch Unterbrechen der Stromversorgung geht das Schaltelement vorzugsweise in einen Ruhezustand, beispielsweise durch eine Federbelastung. Das Schaltelement weist insbesondere einen Ruhezustand auf, in den es ohne Stromzufuhr schaltet. Weiter vorzugsweise wird durch Unterbrechen wenigstens eines der beiden Leiter des Schaltelements ein Bremsvorgang eingeleitet. Damit wird die Einnahme eines sicheren Zustands bei Ausfall der Stromversorgung gewährleistet.

Insbesondere wird der masseseitige Leiter durch die Fahrzeugsteuerung und der spannungsseitige, insbesondere plusseitige oder minusseitige, Leiter durch das Bremssteuergerät geschaltet wird. Alternativ wird der masseseitige Leiter durch das Bremssteuergerät und der spannungsseitige, insbesondere plusseitige oder minusseitige, Leiter durch die Fahrzeugsteuerung geschaltet. Damit ist in beiden Fällen eine eindeutige Zuordnung sichergestellt. Sowohl die Fahrzeugsteuerung als auch das Bremssteuergerät müssen die beiden Leiter aktiv schalten, um die Stromversorgung des Schaltelements zu ermöglichen.

Die Bremseinrichtung des Fahrzeugs leitet vorzugsweise bei einer Fehlfunktion und/oder bei einer Fehlerdetektierung und/oder bei einem Ausfall des Bremssteuergeräts und/oder des Fahrzeugsteuergeräts durch Trennung der Stromzufuhr zur Bremseinrichtung einen Bremsvorgang ein. Damit wird ein sicherer Betrieb des Fahrzeugs erreicht.

Besonders bevorzugt kann die Bremseinrichtung nur gemeinsam durch das Bremssteuergerät und das Fahrzeugsteuergerät deaktiviert werden. Damit ist sichergestellt, dass bei einem Ausfall eines der beiden Geräte die Bremseinrichtung aktiviert ist, also ein Bremsvorgang eingeleitet wird beziehungsweise eine Bremse ein Fahren oder Weiterfahren verhindert. Das Schaltelement wird vorzugsweise über ein zwischengeschaltetes elektrisches Bauteil mit den beiden Leitern verbunden. Damit kann eine Auswertung der Signale auf den beiden Leitern erfolgen. Das Bauteil kann vorzugsweise mit lediglich einem einzigen Leiter mit dem Schaltelement verbunden sein.

Das Schaltelement wird insbesondere durch die Fahrzeugsteuerung und das Bremssteuergerät über eine logische Und-Verknüpfung geschaltet. Dabei erfolgt eine Deaktivierung der Bremseinrichtung vorzugsweise sowohl durch die Fahrzeugsteuerung als auch das Bremssteuergerät. Eine logische Und-Verknüpfung entspricht dabei einem zwingenden Zusammenwirken von Fahrzeugsteuerung und Bremssteuergerät.

Weiter vorzugsweise wird eine Feststellbremse als Bremseinrichtung verwendet. Eine Feststellbremse dient üblicherweise zum Festhalten des Fahrzeugs in einer Parkposition. Sie kann aber auch zum Abbremsen verwendet werden. Dabei kann die Bremskraft geringer sein und ist häufig auch geringer als bei einer üblicherweise für den Fahrbetrieb verwendeten Betriebsbremse.

Die eingangs genannte Aufgabe wird außerdem gelöst durch ein Steuerungssystem für ein autonomes Fahrzeug mit den Merkmalen des Anspruchs 12. Es ist dabei insbesondere zur Ausführung eines Verfahrens nach einem der vorhergehenden Ansprüche vorgesehen. Das Steuerungssystem weist ein Fahrzeugsteuergerät zur Steuerung autonomer Fahrfunktionen des Fahrzeugs und ein Bremssteuergerät zur Steuerung von Bremsfunktionen des Fahrzeugs auf. Eine Bremseinrichtung des Fahrzeugs ist sowohl durch das Bremssteuergerät als auch das Fahrzeugsteuergerät aktivierbar und/oder deaktivierbar, wobei ein Schaltelement, vorzugsweise ein Magnetventil, ansteuerbar ist. Das erfindungsgemäße Steuerungssystem ist dadurch gekennzeichnet, dass das Schaltelement zwei elektrische Leiter zur Ansteuerung aufweist, wobei einer der beiden Leiter mit dem Bremssteuergerät ist und der andere der beiden Leiter mit dem Fahrzeugsteuergerät schaltbar verbunden ist.

Vorzugsweise sind die beiden Leiter zur Stromversorgung des Schaltelements und zu deren Unterbrechung vorgesehen. Damit lässt sich mit einem Paar Leiter eine Aktivierung und Deaktivierung der Bremseinrichtung sicherstellen, wobei gleichzeitig Sicherheitsfunktionen erfüllt werden.

Zur Realisierung der Schaltfunktion des Schaltelements ist besonders bevorzugt wenigstens eine Spule vorgesehen. Die Spule dient weiter bevorzugt zum magnetischen Schalten des Schaltelements, insbesondere in Form eines Magnetventils. So kann eine schnelle und zuverlässige Funktion gewährleistet werden.

Die Bremseinrichtung kann vorzugsweise nur gemeinsam durch das Bremssteuergerät und das Fahrzeugsteuergerät deaktiviert werden. Damit wird insbesondere erreicht, dass die Bremseinrichtung nur deaktiviert werden kann beziehungsweise die Bremsen nur gelöst werden können, wenn sowohl Bremssteuergerät als auch Fahrzeugsteuergerät dies freigeben. Insbesondere bei Ausfall bereits eines der beiden Geräte erfolgt eine automatische Aktivierung der Bremseinrichtung und damit ein Bremsvorgang.

Insbesondere erfolgt bei Unterbrechung zumindest eines der beiden Leiter eine Unterbrechung der Stromversorgung des Schaltelements und eine Aktivierung der Bremseinrichtung. Damit wird erreicht, dass aus Sicherheitsgründen ein Bremsvorgang eingeleitet wird, wenn die Spannungsversorgung unterbrochen wird, beispielsweise durch einen Ausfall der Stromversorgung oder eines einen der Leiter schaltenden Gerätes.

Bevorzugt ist vorgesehen, dass die Bremseinrichtung des Fahrzeugs im Falle einer Fehlfunktion des Bremssteuergeräts oder des Fahrzeugsteuergeräts und/oder einer Fehlerdetektierung durch das Bremssteuergerät und/oder das Fahrzeugsteuergerät aktivierbar ist, vorzugsweise aktiviert wird. Dies dient als Sicherheitsvorkehrung für entsprechende Fehlerzustände des Fahrzeugs beziehungsweise seiner Komponenten.

Schließlich betrifft die Erfindung ein Fahrzeug nach Anspruch 18 mit einem Steuerungssystem für ein autonomes Fahrzeug gemäß den obigen Beschreibungen. Das Fahrzeug weist insbesondere ein Steuerungssystem auf, wie es oben beschrieben ist.

Weitere Merkmale und Merkmalskombinationen ergeben sich insbesondere aus den Patentsprüchen. Die darin beschriebenen Merkmale werden grundsätzlich als kombinierbar angesehen, sofern keine technischen Gründe dagegen sprechen.

Bevorzugte Ausführungsbeispiele der Erfindung werden im Folgenden anhand der Zeichnungen näher beschrieben. In diesen zeigen:
- Fig. 1: ein erstes Ausführungsbeispiel eines erfindungsgemäßen Steuerungssystems für ein autonomes Fahrzeug mit Bremssystem, und
- Fig. 2: ein zweites Ausführungsbeispiel eines erfindungsgemäßen Steuerungssystems für ein autonomes Fahrzeug mit Bremssystem.

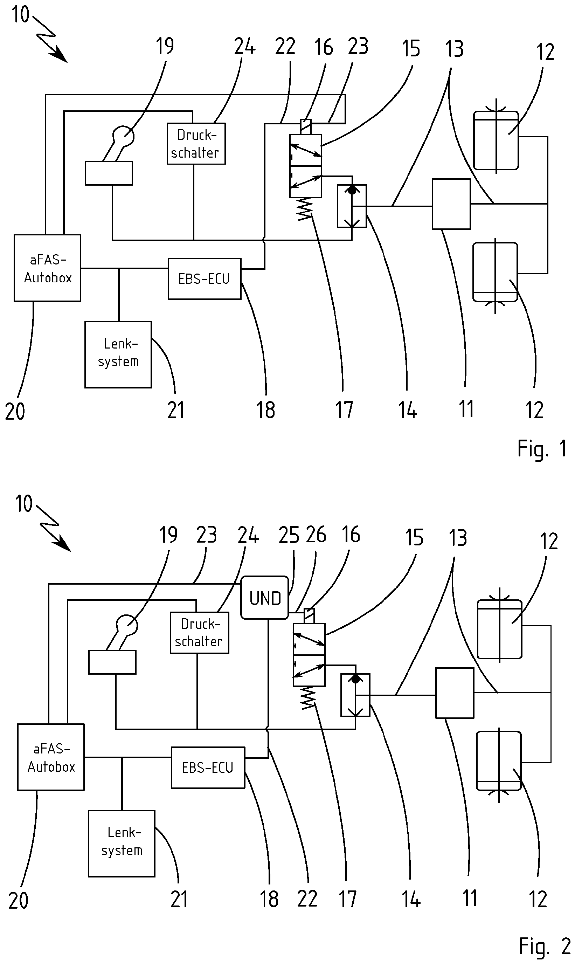

In den beiden Figuren 1 und 2 sind beispielhafte Steuerungssysteme 10 für autonome Fahrzeuge gezeigt, die jeweils ein im Detail beschriebenes Bremssystem aufweisen. Größtenteils sind die beiden gezeigten Ausführungsbeispiele identisch, so dass hier eine gemeinsame Beschreibung erfolgt, bei der allerdings auf die Unterschiede explizit eingegangen wird.

Als Bremseinrichtung des Bremssystems ist hier ein Achsmodulator 11 nebst zweier Bremszylinder 12 gezeigt. Diese werden pneumatisch angesteuert.

Typischerweise ist bereits zu Deaktivierung der Bremsen des Fahrzeugs eine Beaufschlagung mit Pressluft nötig, so dass die eigentlichen Bremsen von den Bremsscheiben der Achse beziehungsweise der Räder gelöst werden. Demnach befinden sich die Bremsen im Ruhezustand gleichzeitig im hier sogenannten "aktivierten Zustand". Dies wird in der Regel durch Federbelastung oder durch Pressluftbeaufschlagung sichergestellt. Demnach bremst das Fahrzeug, also wird ein Bremsvorgang eingeleitet. Bei Beaufschlagung mit Pressluft sind die Bremsen demnach im "deaktivierten Zustand", also von den Bremsscheiben gelöst. Mithin ist der Bremsvorgang beendet.

Zur Durchleitung von Pressluft zur pneumatischen Ansteuerung dienen Bremsleitungen 13. Die wechselnde Beaufschlagung mit Pressluft zur Aktivierung des Bremssystems, also insbesondere einer Einleitung eines Bremsvorganges, beziehungsweise zur Deaktivierung des Bremssystems, also insbesondere einer Beendigung eines Bremsvorganges, wird mittels eines Wechselventils 14 vorgenommen. Ein entsprechendes Reservoir für Pressluft ist hier nicht dargestellt. Pressluft wird aber in üblicher Weise am Fahrzeug erzeugt und bereitgehalten.

Ein Bremsventil 15 als Schaltelement dient zur Ansteuerung des Wechselventils 14 und damit zur Steuerung des Pressluftkreislaufs. Es handelt sich beim Bremsventil um ein 3/2-Wege-Ventil, bei dem zwei Eingänge alternierend mit einem Ausgang verbunden werden können. Der Ausgang ist wiederum mit dem Wechselventil 14 verbunden zur Ansteuerung desselben.

Das Bremsventil 15 ist als Rückschlagventil ausgebildet. Eine Feder 17 dient dabei zum Rückstellen des Bremsventils 15 in eine Ruheposition. Diese Ruheposition entspricht einer Schaltstellung des Wechselventils 14, bei der die Bremseinrichtung im aktivierten Zustand ist, also die Bremsen des Fahrzeugs ein Fahren verhindern.

Das Bremsventil 15 ist hier als Magnetventil ausgebildet, so dass es mittels eines Elektromagneten 16 angesteuert wird, also im Prinzip durch eine elektrische Spule. Das Bremsventil 15 kann so zwischen seinen beiden Schaltstellungen umschaltbar werden.

Das Bremsventil 15 ist außerdem durch ein Bremssteuergerät 18 elektrisch ansteuerbar. Hierbei handelt es sich um ein Steuergerät 18 (engl. ECU = electronic control unit) für elektronisches Bremssysteme (engl. EBS = electronic brake system). Derartige Steuergeräte 18 sind zur Ansteuerung der Bremseinrichtung vorgesehen und implementieren dabei typischerweise auch Funktionen wie Antiblockiersysteme (ABS) und ähnliches.

Eine manuelle Betätigung der Bremse ist ebenfalls vorgesehen. Dazu ist ein Bremshebel 19 vorgesehen. Dieser Bremshebel 19 wirkt direkt auf das Wechselventil und sorgt dafür, dass die Bremseinrichtung aktiviert bleibt. Im vorliegenden Fall wird daher eine Verwendung einer auch als Feststellbremse genutzten Bremseinrichtung gezeigt. Prinzipiell ist eine entsprechende erfindungsgemäße Ausbildung und Vorgehensweise aber auch bei einer reinen Betriebsbremse möglich.

Da es sich bei der Erfindung um eine Bremseinrichtung für autonomes Fahren handelt, ist ein entsprechendes Fahrzeugsteuergerät 20 (aFAS-Autobox) vorgesehen. Dieses Fahrzeugsteuergerät 20 steuert die autonomen Fahrfunktionen, also das selbstständige Fahren des Fahrzeugs ohne Eingriffe des Fahrers.

Demnach ist das Fahrzeugsteuergerät 20 insbesondere mit einem Lenksystem 21 des Fahrzeugs und, wie hier nicht gezeigt ist, mit einem Motor beziehungsweise einem Antriebssystem des Fahrzeugs verbunden, so dass dieses jeweils durch das Fahrzeugsteuergerät 20 für Fahrzwecke angesteuert werden kann. Vor allem erfolgt aber eine Kopplung mit dem Bremssystem. Die Kopplung mit dem Bremssystem erfolgt dabei über das Magnetventil 16.

Im ersten Ausführungsbeispiel sind dabei sowohl das Bremssteuergerät 18 als auch das Fahrzeugsteuergerät 20 zur elektrischen Ansteuerung mit dem Elektromagneten 16 des Bremsventils 15 verbunden.

Der Elektromagnet 16 kann dabei in üblicher Weise mittels zweier Leiter 22 und 23 mit Strom versorgt werden. Sobald aber nur einer der beiden Leiter 22 oder 23 unterbrochen ist, wird der Stromkreis unterbrochen und der Elektromagnet 16 schaltet ab. Somit wird in diesem Fall auch die Bremseinrichtung aktiviert, da das Bremsventil 15 dann aufgrund seiner Federbelastung in den Ruhemodus wechselt.

Indem nun das Bremssteuergerät 18 einen (hier 22) der beiden Leiter 22, 23 und das Fahrzeugsteuergerät 20 den anderen (hier 23) der beiden Leiter 23, 22 schaltet, wird also die erfindungsgemäße Ausfallsicherung erreicht. Es wird nämlich bei Ausfall oder Fehlfunktion bereits eines der beiden Steuergeräte 18, 20 die Bremseinrichtung über das Bremsventil 15 aktiviert, da dann der Elektromagnet 16 abgeschaltet wird. Dabei schaltet jedes der Steuergeräte 18, 20 nur der beiden Leiter 22, 23 der Zuleitung des Elektromagneten 16.

Im zweiten Ausführungsbeispiel in Fig. 2 ist eine Variante mit einer UND-Verknüpfung zwischen Bremssteuergerät 18 und Fahrzeugsteuergerät 20 gezeigt.

Hierzu ist ein vorgeschaltetes UND-Gatter 24 vorgesehen, das aus dem Bremsventil 15 ein sogenanntes "Relaisventil" macht. Die beiden Steuergeräte 18 und 20 müssen hier ebenfalls dasselbe Signal liefern, um die Bremseinrichtung zu deaktivieren. Nur wenn beide Eingänge des UND-Gatters 24 aktiv sind, ist auch der Ausgang aktiv, so dass der Stromkreis zum Elektromagneten 16 geschlossen wird.

Dabei dienen beide Leiter 22 und 23 als Eingänge des UND-Gatters 24. Der Elektromagnet 16 wird in diesem Fall ausgehend vom Ausgang des UND-Gatters 24 über einen einzigen Leiter 26 angesteuert. Nur wenn beide Eingänge des UND-Gatters 24 aktiv sind, werden auch der Ausgang und damit der Leiter 26 aktiv geschaltet, so dass im Ergebnis auch das Magnetventil 15 aktiviert wird.

In den beiden als Ausführungsbeispiele gezeigten Varianten der Erfindung wird hier eine Rückmeldung über den aktuellen Status der Bremseinrichtung an das Fahrzeugsteuergerät 20 gegeben. Hierzu ist ein Druckschalter 25 vorgesehen, der den Druck im Bremssystem auswertet und das Ergebnis entsprechend an das Fahrzeugsteuergerät 20 zurückmeldet.

## Patentansprüche

1. Verfahren zur Steuerung eines autonomen Fahrzeugs, mit einem Fahrzeugsteuergerät (20) zur Steuerung autonomer Fahrfunktionen des Fahrzeugs und mit einem Bremssteuergerät (18) zur Steuerung von Bremsfunktionen eines insbesondere pneumatischen Bremssystems des Fahrzeugs mit wenigstens einer Bremseinrichtung, insbesondere einer Feststellbremse, wobei die Bremseinrichtung durch das Bremssteuergerät (18) und/oder das Fahrzeugsteuergerät (20) zum Bremsen aktivierbar und zum Fahren deaktivierbar ist, indem wenigstens ein Schaltelement (15), wie insbesondere ein Bremsventil, vorzugsweise ein Magnetventil, angesteuert wird, **dadurch gekennzeichnet, dass** das Schaltelement (15) zur Deaktivierung der Bremseinrichtung vom Bremssteuergerät (18) und vom Fahrzeugsteuergerät (20) gemeinsam angesteuert wird.

2. Verfahren nach Anspruch 1, **dadurch gekennzeichnet, dass** zwei elektrische Leiter (22, 23) zur Ansteuerung des Schaltelements (15) vorgesehen sind, wobei einer der beiden Leiter (22; 23) vom Bremssteuergerät (18) und der andere der beiden Leiter (23; 22) vom Fahrzeugsteuergerät (20) geschaltet wird.

3. Verfahren nach Anspruch 2, **dadurch gekennzeichnet, dass** das Schaltelement (15) mittels der beiden Leiter (22, 23) mit elektrischem Strom versorgt wird.

4. Verfahren nach Anspruch 1 oder 2, **dadurch gekennzeichnet, dass** eine Spule zur Realisierung der Schaltfunktion des Schaltelements (15) vorgesehen wird, wobei die Spule vorzugsweise durch die beiden Leiter (22, 23) mit Strom versorgt wird.

5. Verfahren nacheinem der Ansprüche 2 bis 4, **dadurch gekennzeichnet, dass** durch Unterbrechen zumindest eines der beiden Leiter (22, 23) die Stromversorgung des Schaltelements (15) unterbrochen wird, wobei insbesondere durch Unterbrechen wenigstens eines der beiden Leiter (22, 23) des Schaltelements ein Bremsvorgang eingeleitet wird.

6. Verfahren nach einem der Ansprüche 2 bis 5, **dadurch gekennzeichnet, dass** der masseseitige Leiter (22; 23) durch das Fahrzeugsteuergerät (20) und der spannungsseitige, insbesondere plusseitige oder minusseitige, Leiter (23; 22) durch das Bremssteuergerät (18) geschaltet wird oder dass der masseseitige Leiter (23; 22) durch das Bremssteuergerät (18) und der spannungsseitige, insbesondere plusseitige oder minusseitige, Leiter (22; 23) durch das Fahrzeugsteuergerät (20) geschaltet wird.

7. Verfahren nach einem der vorhergehenden Ansprüche, **dadurch gekennzeichnet, dass** die Bremseinrichtung des Fahrzeugs bei einer Fehlfunktion und/oder bei einer Fehlerdetektierung und/oder bei einem Ausfall des Bremssteuergeräts (18) und/oder des Fahrzeugsteuergeräts (20) durch Trennung der Stromzufuhr zur Bremseinrichtung beziehungsweise zum Schaltelement (15) einen Bremsvorgang einleitet.

8. Verfahren nach einem der vorhergehenden Ansprüche, **dadurch gekennzeichnet, dass** die Bremseinrichtung nur gemeinsam durch das Bremssteuergerät (18) und das Fahrzeugsteuergerät (20) deaktiviert werden kann.

9. Verfahren nach einem der vorhergehenden Ansprüche, **dadurch gekennzeichnet, dass** das Schaltelement (15) über ein zwischengeschaltetes elektrisches Bauteil (25) mit den beiden Leitern (22, 23), wobei das Bauteil (25) vorzugsweise mit lediglich einem einzigen Leiter mit dem Schaltelement verbunden wird.

10. Verfahren nach einem der vorhergehenden Ansprüche, **dadurch gekennzeichnet, dass** das Schaltelement (15) durch die Fahrzeugsteuerung (20) und das Bremssteuergerät (18) über einen Logikbaustein, vorzugsweise eine logische UND-Verknüpfung, geschaltet wird, wobei vorzugsweise eine Deaktivierung der Bremseinrichtung sowohl durch das Fahrzeugsteuergerät (20) als auch das Bremssteuergerät (18) gemeinsam erfolgen muss und/oder wobei es sich bei dem Bauteil (25) um einen Logikbaustein, insbesondere ein UND-Gatter handeln kann.

11. Verfahren nach einem der vorhergehenden Ansprüche, **dadurch gekennzeichnet, dass** eine Feststellbremse als Bremseinrichtung verwendet wird.

12. Steuerungssystem für ein autonomes Fahrzeug, insbesondere zur Ausführung eines Verfahrens nach einem der vorhergehenden Ansprüche, mit einem Fahrzeugsteuergerät (20) zur Steuerung autonomer Fahrfunktionen des Fahrzeugs und mit einem Bremssteuergerät (18) zur Steuerung von Bremsfunktionen des Fahrzeugs, wobei eine Bremseinrichtung des Fahrzeugs sowohl durch das Bremssteuergerät (18) als auch das Fahrzeugsteuergerät (20) aktivierbar und/oder deaktivierbar ist, wobei ein Schaltelement (15), wie insbesondere ein Bremsventil, vorzugsweise ein Magnetventil, ansteuerbar ist, **dadurch gekennzeichnet, dass** das Schaltelement (15) zur Deaktivierung der Bremseinrichtung durch Bremssteuergerät (18) und Fahrzeugsteuergerät (20) gemeinsam angesteuert wird.

13. Steuerungssystem nach Anspruch 12, **dadurch gekennzeichnet, dass** zwei elektrische Leiter (22, 23) zur Ansteuerung des Schaltelements (15) vorgesehen sind, wobei einer der beiden Leiter (22; 23) mit dem Bremssteuergerät (18) und der andere der beiden Leiter (23; 22) mit dem Fahrzeugsteuergerät (20) schaltbar verbunden ist.

14. Steuerungssystem nach Anspruch 13, **dadurch gekennzeichnet, dass** die beiden Leiter (22, 23) zur Stromversorgung des Schaltelements (15) und zu deren Unterbrechung vorgesehen sind.

15. Steuerungssystem nach einem der Ansprüche 12 bis 14, **dadurch gekennzeichnet, dass** eine Spule zur Realisierung der Schaltfunktion des Schaltelements (15) vorgesehen ist, wobei die Spule vorzugsweise durch die beiden Leiter (22, 23) mit Strom versorgt ist.

16. Steuerungssystem nach einem der Ansprüche 13 bis 15, **dadurch gekennzeichnet, dass** bei Unterbrechung zumindest eines der beiden Leiter (22, 23) eine Unterbrechung der Stromversorgung des Schaltelements (15) und eine Aktivierung der Bremseinrichtung erfolgt.

17. Steuerungssystem nach einem der Ansprüche 12 bis 16, **dadurch gekennzeichnet, dass** vorgesehen ist, die Bremseinrichtung des Fahrzeugs im Falle einer Fehlfunktion des Bremssteuergeräts (18) oder des Fahrzeugsteuergeräts (20) und/oder einer Fehlerdetektierung durch das Bremssteuergerät (18) und/oder das Fahrzeugsteuergerät (20) zu aktivieren.

18. Fahrzeug mit einem Steuerungssystem für ein autonomes Fahrzeug nach einem der Ansprüche 12 bis 17.

## Claims

1. Method for controlling an autonomous vehicle comprising a vehicle control appliance (20) for controlling autonomous driving functions of the vehicle and comprising a brake control appliance (18) for controlling braking functions of an in particular pneumatic brake system of the vehicle that comprises at least one brake device, in particular a parking brake, wherein the brake device can be activated for braking and deactivated for driving by the brake control appliance (18) and/or the vehicle control appliance (20) by actuating at least one switching element (15), such as in particular a brake valve, preferably a solenoid valve, **characterized in that** the switching element (15) is actuated jointly by the brake control appliance (18) and the vehicle control appliance (20) in order to deactivate the brake device.

2. Method according to claim 1, **characterized in that** two electrical conductors (22, 23) are provided for actuating the switching element (15), wherein one of the two conductors (22; 23) is switched by the brake control appliance (18) and the other of the two conductors (23; 22) is switched by the vehicle control appliance (20).

3. Method according to claim 2, **characterized in that** the switching element (15) is supplied with electrical power by means of the two conductors (22, 23).

4. Method according to claim 1 or 2, **characterized in that** a coil is provided for implementing the switching function of the switching element (15), wherein the coil is preferably supplied with power by the two conductors (22, 23).

5. Method according to any one of claims 2 to 4, **characterized in that** the power supply to the switching element (15) is interrupted by interrupting at least one of the two conductors (22, 23), wherein in particular a braking operation is initiated by interrupting at least one of the two conductors (22, 23) of the switching element.

6. Method according to any one of claims 2 to 5, **characterized in that** the ground-side conductor (22; 23) is switched by the vehicle control appliance (20) and the voltage-side, in particular plus-side or minus-side, conductor (23; 22) is switched by the brake control appliance (18), or **in that** the ground-side conductor (23; 22) is switched by the brake control appliance (18) and the voltage-side, in particular plus-side or minus-side, conductor (22; 23) is switched by the vehicle control appliance (20).

7. Method according to any one of the preceding claims, **characterized in that**, in the event of a malfunction and/or in the event of a fault being detected and/or in the event of failure of the brake control appliance (18) and/or of the vehicle control appliance (20), the brake device of the vehicle initiates a braking operation by disconnecting the power supply to the brake device and/or to the switching element (15).

8. Method according to any one of the preceding claims, **characterized in that** the brake device can only be deactivated jointly by the brake control appliance (18) and the vehicle control appliance (20).

9. Method according to any one of the preceding claims, **characterized in that** the switching element (15) is connected to the two conductors (22, 23) via an interposed electrical component (25), wherein the component (25) is preferably connected to the switching element by just one single conductor.

10. Method according to any one of the preceding claims, **characterized in that** the switching element (15) is switched by the vehicle controller (20) and the brake control appliance (18) via a logic module, preferably a logical AND link, wherein preferably a deactivation of the brake device must be effected jointly by both the vehicle control appliance (20) and the brake control appliance (18), and/or wherein the component (25) can be a logic module, in particular an AND gate.

11. Method according to any one of the preceding claims, **characterized in that** a parking brake is used as the brake device.

12. Control system for an autonomous vehicle, in particular for carrying out a method according to any one of the preceding claims, comprising a vehicle control appliance (20) for controlling autonomous driving functions of the vehicle and comprising a brake control appliance (18) for controlling braking functions of the vehicle, wherein a brake device of the vehicle can be activated and/or deactivated by both the brake control appliance (18) and the vehicle control appliance (20), wherein a switching element (15), such as in particular a brake valve, preferably a solenoid valve, can be actuated, **characterized in that** the switching element (15) is actuated jointly by the brake control appliance (18) and the vehicle control appliance (20) in order to deactivate the brake device.

13. Control system according to claim 12, **characterized in that** two electrical conductors (22, 23) are provided for actuating the switching element (15), wherein one of the two conductors (22; 23) is switchably connected to the brake control appliance (18) and the other of the two conductors (23; 22) is switchably connected to the vehicle control appliance (20).

14. Control system according to claim 13, **characterized in that** the two conductors (22, 23) are provided for supplying power to the switching element (15) and for interrupting this power supply.

15. Control system according to any one of claims 12 to 14, **characterized in that** a coil is provided for implementing the switching function of the switching element (15), wherein the coil is preferably supplied with power by the two conductors (22, 23).

16. Control system according to any one of claims 13 to 15, **characterized in that**, when at least one of the two conductors (22, 23) is interrupted, the power supply to the switching element (15) is interrupted and the brake device is activated.

17. Control system according to any one of claims 12 to 16, **characterized in that** provision is made to activate the brake device of the vehicle in the event of a malfunction of the brake control appliance (18) or of the vehicle control appliance (20) and/or in the event of a fault being detected by the brake control appliance (18) and/or the vehicle control appliance (20).

18. Vehicle comprising a control system for an autonomous vehicle according to any one of claims 12 to 17.

## Revendications

1. Procédé pour la commande d'un véhicule autonome, avec un appareil de commande de véhicule (20) pour la commande des fonctions de conduite autonomes du véhicule et avec un appareil de commande de freinage (18) pour la commande des fonctions de freinage d'un système de freinage en particulier pneumatique du véhicule avec au moins un équipement de freinage, en particulier un frein de stationnement, dans lequel l'équipement de freinage peut être activé par l'appareil de commande de freinage (18) et/ou l'appareil de commande de véhicule (20) pour le freinage et peut être désactivé pour la conduite, du fait qu'au moins un élément de commutation (15), tel qu'en particulier une soupape de freinage, de préférence une électrovanne, est commandé, **caractérisé en ce que** l'élément de commutation (15) est commandé pour la désactivation de l'équipement de freinage de l'appareil de commande de freinage (18) et de l'appareil de commande de véhicule (20) conjointement.

2. Procédé selon la revendication 1, **caractérisé en ce que** deux conducteurs (22, 23) électriques pour la commande de l'élément de commutation (15) sont prévus, dans lequel un des deux conducteurs (22 ; 23) est commuté par l'appareil de commande de freinage (18) et l'autre des deux conducteurs (23 ; 22) par l'appareil de commande de véhicule (20).

3. Procédé selon la revendication 2, **caractérisé en ce que** l'élément de commutation (15) est alimenté en courant électrique au moyen des deux conducteurs (22, 23).

4. Procédé selon la revendication 1 ou 2, **caractérisé en ce qu'**une bobine pour la réalisation de la fonction de commutation de l'élément de commutation (15) est prévue, dans lequel la bobine est de préférence alimentée en courant par les deux conducteurs (22, 23).

5. Procédé selon l'une quelconque des revendications 2 à 4, **caractérisé en ce que** par coupure d'au moins un des deux conducteurs (22, 23) l'alimentation en courant de l'élément de commutation (15) est coupée, dans lequel en particulier un processus de freinage est déclenché par coupure d'au moins un des deux conducteurs (22, 23) de l'élément de commutation.

6. Procédé selon l'une quelconque des revendications 2 à 5, **caractérisé en ce que** le conducteur (22 ; 23) côté masse est commuté par l'appareil de commande de véhicule (20) et le conducteur (23 ; 22) côté tension, en particulier côté plus ou côté moins, par l'appareil de commande de freinage (18) ou que le conducteur (23 ; 22) côté masse est commuté par l'appareil de commande de freinage (18) et le conducteur (22 ; 23) côté tension, en particulier côté plus ou côté moins, par l'appareil de commande de véhicule (20).

7. Procédé selon l'une quelconque des revendications précédentes, **caractérisé en ce que** l'équipement de freinage du véhicule lors d'un dysfonctionnement et/ou lors d'une détection d'erreur et/ou d'une défaillance de l'appareil de commande de freinage (18) et/ou de l'appareil de commande de véhicule (20) par coupure de l'amenée de courant à l'équipement de freinage ou à l'élément de commutation (15) déclenche un processus de freinage.

8. Procédé selon l'une quelconque des revendications précédentes, **caractérisé en ce que** l'équipement de freinage ne peut être désactivé que conjointement par l'appareil de commande de freinage (18) et l'appareil de commande de véhicule (20).

9. Procédé selon l'une quelconque des revendications précédentes, **caractérisé en ce que** l'élément de commutation (15) aux deux conducteurs (22, 23) par l'intermédiaire d'un composant (25) électrique interposé, dans lequel le composant (25) est relié à l'élément de commutation de préférence avec un seul conducteur.

10. Procédé selon l'une quelconque des revendications précédentes, **caractérisé en ce que** l'élément de commutation (15) est commuté par la commande de véhicule (20) et l'appareil de commande de freinage (18) par l'intermédiaire d'un module logique, de préférence une opération logique ET, dans lequel de préférence une désactivation de l'équipement de freinage doit s'effectuer aussi bien par l'appareil de commande de véhicule (20) que par l'appareil de commande de freinage (18) conjointement et/ou dans lequel il peut s'agir pour le composant (25) d'un module logique, en particulier d'une porte ET.

11. Procédé selon l'une quelconque des revendications précédentes, **caractérisé en ce qu'**un frein de stationnement est utilisé comme équipement de freinage.

12. Système de commande pour un véhicule autonome, en particulier pour la mise en œuvre d'un procédé selon l'une quelconque des revendications précédentes, avec un appareil de commande de véhicule (20) pour la commande des fonctions de conduite autonomes du véhicule et avec un appareil de commande de freinage (18) pour la commande des fonctions de freinage du véhicule, dans lequel un équipement de freinage du véhicule peut être activé et/ou désactivé aussi bien par l'appareil de commande de freinage (18) que l'appareil de commande de véhicule (20), dans lequel un élément de commutation (15), tel qu'en particulier une soupape de freinage, de préférence une électrovanne, peut être commandé, **caractérisé en ce que** l'élément de commutation (15) pour la désactivation de l'équipement de freinage est commandé par l'appareil de commande de freinage (18) et l'appareil de commande de véhicule (20) conjointement.

13. Système de commande selon la revendication 12, **caractérisé en ce que** deux conducteurs (22, 23) électriques pour la commande de l'élément de commutation (15) sont prévus, dans lequel un des deux conducteurs (22 ; 23) est relié de manière commutable à l'appareil de commande de freinage (18) et l'autre des deux conducteurs (23 ; 22) à l'appareil de commande de véhicule (20).

14. Système de commande selon la revendication 13, **caractérisé en ce que** les deux conducteurs (22, 23) sont prévus pour l'alimentation en courant de l'élément de commutation (15) et pour la coupure de celle-ci.

15. Système de commande selon l'une quelconque des revendications 12 à 14, **caractérisé en ce qu'**une bobine pour la réalisation de la fonction de commutation de l'élément de commutation (15) est prévue, dans lequel la bobine est alimentée en courant de préférence par les deux conducteurs (22, 23).

16. Système de commande selon l'une quelconque des revendications 13 à 15, **caractérisé en ce que** lors de la coupure d'au moins un des deux conducteurs (22, 23) une coupure de l'alimentation en courant de l'élément de commutation (15) et une activation de l'équipement de freinage s'effectue.

17. Système de commande selon l'une quelconque des revendications 12 à 16, **caractérisé en ce qu'**il est prévu d'activer l'équipement de freinage du véhicule dans le cas d'un dysfonctionnement de l'appareil de commande de freinage (18) ou de l'appareil de commande de véhicule (20) et/ou d'une détection d'erreur par l'appareil de commande de freinage (18) et/ou l'appareil de commande de véhicule (20).

18. Véhicule avec un système de commande pour un véhicule autonome selon l'une quelconque des revendications 12 à 17.
